# EUROPÄISCHE PATENTANMELDUNG

(11) **EP 4 681 548 A1**
(43) Veröffentlichungstag der Anmeldung: **21.01.2026**
(21) Anmeldenummer: 24189754.5
(22) Anmeldetag: 19.07.2024
(51) Int. Cl.: A23F 5/12, A23P 20/10, A23P 20/18, B65D 65/46

(54) **VERFAHREN ZUR BESCHICHTUNG EINES PULVERPRESSLINGS**

(71) Anmelder: Delica AG, 5033 Buchs AG (CH)
(72) Erfinder: Maschke, Ferdinand, 4056 Basel (CH); Tison, Noelie, 40140 Azur (FR); Lange, Vanessa, 79804 Dogern (DE); Thilla, Tim, 79576 Weil am Rhein (DE); Siefarth, Caroline, 4102 Binningen (CH); Affolter, Roland, 5103 Möriken (CH)
(74) Vertreter: Hepp Wenger Ryffel AG

(57) **Zusammenfassung**

Die Erfindung betrifft ein Verfahren zur Beschichtung eines Pulverpresslings, insbesondere zur Herstellung einer Getränkepulver enthaltenen Kapsel. Das Verfahren umfasst die folgenden Schritte:
a) Bereitstellen eines Pulverpresslings aus einem wenigstens ein Polysaccharid enthaltenden Pulver,
b) Bereitstellen einer Beschichtungslösung aus mindestens einem Polysaccharid zum Beschichten des Pulverpresslings
c) Aufbringen der hochviskosen Beschichtungslösung auf den Pulverpressling,
d) Trocknen des beschichteten Pulverpresslings.

Die Beschichtungslösung weist eine Viskosität zwischen mindestens 400 mPas und maximal 4000 mPas, bevorzugt zwischen 600 und 2500 mPas und besonders bevorzugt zwischen 800 und 1500 mPas auf, gemessen mit einem Rheometer. Die Erfindung betrifft auch eine Kapsel zur Getränkezubereitung.

## Beschreibung

Die vorliegende Erfindung betrifft ein Verfahren zur Beschichtung eines Pulverpresslings, insbesondere zur Herstellung einer Getränkepulver enthaltenen Kapsel, sowie eine Kapsel gemäss den Oberbegriffen der unabhängigen Ansprüche.

Im Stand der Technik sind Kapseln bekannt, die aus einem Pressling mit einer ummantelnden Schicht bestehen. Beispielsweise beschreibt DE 10 2014 000 187 B4 eine ummantelnde Schicht aus einem Polysaccharid mit einem polyolen Spacer und einem zugehörigen Vernetzer. EP 3 115 316 A1 beschreibt eine Kapsel zur Zubereitung eines Getränkes aus einem Pressling und wenigstens einer Beschichtungsschicht aus einem vernetzten Polysaccharid ohne polyolem Abstandshalter. EP 3 225 566 A1 beschreibt eine Kapsel zur Zubereitung eines Getränkes aus einem aus wenigstens einem Polysaccharid zusammengesetzten Kapselkörper, der mit einem Polysaccharid-Pulver befüllt ist und eine Beschichtungsschicht aus einem vernetzten Polysaccharid umfasst.

All diesen Kapseln ist gemein, dass die Beschichtung durch Eintauchen bzw. Benetzen des Presslings oder Kapselkörpers mit einer Polysaccharid-Lösung und anschließendem Eintauchen in einer Vernetzerlösung hergestellt wird. Dazu werden in der Regel dünnflüssige Polysaccharid-Lösungen verwendet, damit diese gepumpt, übergossen und rezirkuliert werden können. Verdünnte Lösungen haben den Nachteil, dass sie in einer sehr dünnen Beschichtung resultieren. Um eine bestimmte Wandstärke der Beschichtung zu erhalten, muss der Beschichtungsschritt mehrmals wiederholt werden. Dies ist mit einem hohen Zeitaufwand und Energieverbrauch verbunden.

Es ist daher eine Aufgabe der vorliegenden Erfindung, die Nachteile des Standes der Technik zu überwinden. Es ist insbesondere eine Aufgabe der Erfindung, ein Verfahren bereitzustellen, das eine effizientere und kostengünstigere Beschichtung eines Pulverpresslings ermöglicht. Es ist weiter eine Aufgabe der Erfindung, eine Kapsel aus einem Pulverpressling und einer Beschichtung bereitzustellen.

Die Aufgaben werden durch die unabhängigen Ansprüche gelöst. Bevorzugte Ausführungsformen sind in abhängigen Ansprüchen beschrieben.

Ein erster Aspekt der Erfindung betrifft ein Verfahren zur Beschichtung eines Pulverpresslings, insbesondere zur Herstellung einer Getränkepulver enthaltenden Kapsel. Das Verfahren umfasst die folgenden Schritte:
a) Bereitstellen eines Pulverpresslings aus einem wenigstens ein Polysaccharid enthaltenden Pulver,
b) Bereitstellen einer hochviskosen Beschichtungslösung aus mindestens einem Polysaccharid zum Beschichten des Pulverpresslings,
c) Aufbringen der Beschichtungslösung auf den Pulverpressling,
d) Trocknen des beschichteten Pulverpresslings.

Die Beschichtungslösung weist eine Viskosität zwischen mindestens 400 mPas und maximal 4000 mPas, bevorzugt zwischen 600 und 2500 mPas und besonders bevorzugt zwischen 800 und 1500 mPas auf, gemessen mit einem Rheometer.

Die Bestimmung der Viskosität erfolgt dabei durch Aufnahme der Viskositätskurve über scherrheologische Messungen (5-100 1/s Scherrate linear, t=56 s) bei 30°C mittels eines Rheometers mit einem Platte-Platte-Messsystem mit 50 mm Plattendurchmesser und nach Auswertung mittels Casson/Steiner Regression. Beispielsweise kann die Viskosität mit einem Rheometer MCR 72 der Firma Anton Paar bestimmt werden.

Das Verfahren erlaubt die Nutzung von hochviskosen Polysaccharid-Lösungen, insbesondere hochviskosen Alginatlösungen. Hochviskoses Alginat ist durch seine hohe Fliessgrenze schlecht auf das zu beschichtende Gut aufzutragen, so dass die herkömmlichen Herstellungsverfahren (Eintauchen in eine Alginatlösung) nicht praktikabel sind. Durch die Verwendung von alternativen Auftragstechniken lässt sich hochviskoses Alginat nutzbar machen. Dadurch können Pulverpresslinge schnell und effizient in einem Schritt beschichtet werden. Das Verfahren ist kostengünstig und hat einen geringeren Energieumsatz.

Das Aufbringen in Schritt c) kann durch Einbringen des Presslings in eine Teilhülle und anschliessendem Umspritzen erfolgen. Hierzu wird beispielsweise eine Teilhülle in Halbkugelform bereitgestellt, in welcher der Pressling eingelegt wird. Die Teilhülle und der Pressling werden in einer halbkugelförmigen Form, vorzugsweise aus Metall, eingelegt und mit einer weiteren Form mit einer halbkugelförmigen Aussparung eingeschlossen. Über einen Zugang kann die Form anschliessen mit der Beschichtungslösung befüllt werden, so dass der Pressling vollumfänglich beschichtet wird. Vor dem Trennen der Formen können diese mitsamt dem eingeschlossenen und umhüllten Pressling gekühlt werden.

Für die Herstellung der Teilhülle kann eine vorbestimmte Menge der hochviskosen Beschichtungslösung vorzugsweise unter Druck in eine Form mit einer halbkugelförmigen Aussparung gefüllt werden. Mittels eines Stempels kann in der Form eine Teilhülle ausgebildet werden. Form und Stempel sind vorzugsweise aus Metall geformt. Vor dem Trennen von Form und Stempel können diese mitsamt der ausgebildeten Teilhülle gekühlt werden. Es versteht sich von selbst, dass die Teilhülle keine Halbschale ausbilden muss, sondern lediglich einen Teil davon.

Zur Herstellung der Teilhülle und/oder beim Umspritzen kann eine Spaltbreite zwischen Form und Stempel bzw. zwischen Pressling und Form von 100 bis 1000 pm, bevorzugt von 250 bis 800 pm, besonders bevorzug von 400 bis 600 pm, ausgebildet sein.

Für die Herstellung der Teilhülle und das Umspritzen kann eine identische Beschichtungslösung verwendet werden.

Unter Aufbringen in Schritt c) kann dabei insbesondere ein Sprühen bzw. eine Sprühtechnik verstanden werden. Es sind aber auch andere Auftragstechniken möglich. Beispielsweise wird die Lösung mit Überdruck mit Hilfe eines Zerstäubungsmediums aufgesprüht, mittels Schlitzdüsen-Beschichtung, Extrusionsbeschichtung, Bladecoating und/oder durch Ummanteln mithilfe einer Spritzgussform aufgebracht. Beim Sprühen wird die Viskosität idealerweise derart gewählt, dass Düsen nicht verstopfen, aber der Pulverpressling dennoch mit ausreichend Material beschichtet wird.

Vor dem eigentlichen Aufbringen des hochviskosen Alginats in Schritt c) kann ein Befeuchtungsschritt des Presslings, beispielsweise mit Wasser, erfolgen. Die Befeuchtung kann helfen, dass das Coating an den Auflagestellen des Presslings weniger oder keine Löcher bildet. Die Befeuchtung kann auch einer möglichen Blasenbildung im Trocknungsschritt entgegenwirken. Die Blasenbildung kann auch reduziert oder ganz verhindert werden, wenn der Pressling vor dem Coating erwärmt wird.

Das mindestens eine Polysaccharid der Beschichtungslösung kann ausgewählt sein aus der Gruppe bestehend aus: Alginate, Stärken, modifizierte Stärken, Cellulosen, Chitin, Chitosan, Carragenen, Pektine, Agar, Xanthan, Gellan, Dextrane, Galactomannan, Glucomannan, Guaran, Carubin, Gummi Arabicum, Scleroglucan, Pullulan, Derivate oder Mischungen davon, bevorzugt Alginat.

Unter einem "Pressling" wird gemäss der vorliegenden Erfindung ein Kernmaterial verstanden, das unter Druck verdichtet wurde. Die Bereitstellung des Kernmaterials der Kapsel als Pressling ist vorteilhaft, wenn das Kernmaterial erfindungsgemäss durch Eintauchen, Überziehen oder Besprühen mit der erfindungsgemässen Beschichtung zumindest teilweise ummantelt wird, so dass es während des Ummantelungsvorgangs nicht zerfällt. Das Kernmaterial weist daher vorzugsweise eine bestimmte Bruchfestigkeit auf. Dies kann vorzugsweise dadurch erreicht werden, dass die Verdichtung des Kernmaterials mit einem Kompressionsdruck im Bereich von 1-100 MPa, bevorzugt 5-50 MPa, durchgeführt wird.

Der zur Herstellung des Presslings anzulegende Kompressionsdruck ist abhängig von den Eigenschaften des Kernmaterials, im Fall von Kaffeepulver beispielsweise vom Mahlgrad, Röstgrad und Feuchtigkeitsgehalt des Pulvers. Insbesondere bei Kaffeepulver kann beobachtet werden, dass Pulver mit kleinerem Fett- oder Ölanteil, z.B. entkoffeiniertes Kaffeepulver oder Kaffeepulver mit heller Röstfarbe, einen höheren Kompressionsdruck bedingt, um einen stabilen Pressling zu erzielen.

Die Festigkeit des Presslings wird bestimmt, indem der Pressling zwischen zwei Platten einer Druck-Zugtestmaschine (beispielsweise mit einem Kraftaufnehmer Xforce P der Firma Zwick/Roell) positioniert und die erforderliche Kraft zum Zerbrechen des Presslings bestimmt wird. Diese Methode ist auch in der WO 2008/123775 A1, S.3 beschrieben.

Vorteilhafterweise wird die Beschichtungslösung in oder nach Schritt c) zusätzlich mit einem Vernetzungsmittel vernetzt. Es ist möglich, ein Vernetzungsmittel zuerst aufzutragen. Es ist aber auch denkbar, dieses Vernetzungsmittel zusammen mit der Beschichtungslösung oder nach dem Auftragen der Beschichtungslösung aufzubringen. Des Weiteren kann das Vernetzungsmittel durch Bestäuben oder Pulverbeschichtung in fester Form aufgebracht werden.

Die Vernetzung kann dabei kovalent, ionisch und/oder koordinativ erfolgen.

Eine Vernetzung über kovalente Bindungen ermöglicht eine sehr beständige Beschichtung. Dabei erfolgt die Vernetzung über kovalente Bindungen üblicherweise durch die Reaktion des mindestens einen Polysaccharids mit einem geeigneten Vernetzer. Als Vernetzer eignen sich insbesondere difunktionelle organische Verbindungen, wobei die funktionellen Gruppen beispielsweise aus der Gruppe ausgewählt sind, die aus Carbonsäuren, Salzen von Carbonsäuren, aktivierten Carbonsäuren, Aminen, Alkoholen, Aldehyden und Ketonen besteht. Unter aktivierten Carbonsäuren werden in diesem Zusammenhang Carbonsäurehalogenide, Aktivester von Carbonsäuren, Anhydride von Carbonsäuren oder andere reaktive Derivate von Carbonsäuren verstanden.

Durch ionische und/oder koordinative Bindungen vernetzte Polysaccharide lassen sich besonders einfach herstellen und beeinträchtigen nicht die biologische Abbaubarkeit des verwendeten Polysaccharids. Die ionische und/oder koordinative Vernetzung kann beispielsweise mittels Polysacchariden erreicht werden, welche anionische Gruppen, wie Carboxylatgruppen oder Sulfonatgruppen, aufweisen. Durch Einbringen zweiwertiger oder höherwertiger Kationen, insbesondere Erdalkalimetallionen, erfolgt dann eine ionische bzw. koordinative Vernetzung der anionischen Gruppen des Polysaccharids, um eine stabile Beschichtung auszubilden.

Eine koordinative Bindung bezeichnet in diesem Zusammenhang eine Wechselwirkung zwischen einem Elektronenpaardonator und einem Elektronenpaarakzeptor, wie sie beispielsweise zwischen freien Elektronenpaaren von Sauerstoffatomen in Hydroxygruppen und Kationen stattfinden kann.

Besonders bevorzugt ist das Vernetzungsmittel eine Erdalkalimetallionen-Lösung und ganz besonders bevorzugt Calciumchlorid.

Das Auftragen des Vernetzungsmittel kann durch Eintauchen in ein Bad mit dem Vernetzungsmittel erfolgen. Aber auch das Aufsprühen der Lösung ist denkbar. Wahlweise kann das Vernetzungsmittel auch mit der Beschichtungslösung vermischt werden oder in fester Form durch Bestäubung oder Pulverbeschichtung aufgetragen werden.

Bei der Verwendung eines Calciumchlorid-Bades kann die Verweilzeit des beschichteten Presslings im Bad zwischen 2 und 30 Sekunden variieren. Vorzugsweise werden Bad-Konzentrationen von 5 bis 30 % (w/w) verwendet, 10-20%ige Lösungen sind bevorzugt.

Das Vernetzungsmittel kann in der Beschichtungslösung integriert sein und das Vernetzen verzögert auslösen, insbesondere durch den Einsatz von schwerlöslichen Erdalkalisalzen mit einer definierten Menge geeigneter Komplexbildner, durch Herabsetzen des pH-Wertes und/oder der Temperatur. Durch die Integration des Vernetzungsmittels in der Beschichtungslösung kann das Verfahren nochmals vereinfacht werden. Durch eine verzögerte Vernetzung wird das eigentliche Beschichten nicht beeinflusst. Ausserdem kann dadurch der Zeitpunkt des Vernetzens durch externe Faktoren gezielt bestimmt werden.

Eine Fliessgrenze der Beschichtungslösung kann zwischen mindestens 1 Pa und maximal 170 Pa, bevorzugt zwischen 25 Pa und 150 Pa und besonders bevorzugt zwischen 50 Pa und 100 Pa liegen, gemessen bei 30°C mittels eines Rheometers mit Platte-Platte Messsystem mit 50 mm Platten-Durchmesser. Beispielsweise kann ein Rheometer MCR72 der Firma Anton Paar verwendet werden.

Vorteilhafterweise liegt der Pulverpressling in Schritt c) an Auflagestellen, vorzugsweise auf mindestens einem Set aus Spitzen, auf. Besonders bevorzugt umfasst ein Set mindestens 3 Spitzen. Der Pulverpressling kann auf den Auflagestellen bewegt und/oder rotiert werden, insbesondere beim Besprühen des Pulverpresslings mit der Beschichtungslösung. Die Auflagestellen können dabei auf einer Drehscheibe gelagert sein, so dass sich der Pressling mitsamt den Auflagestellen drehen kann.

Vorzugsweise weisen die Auflagestellen nur sehr kleine Kontaktflächen zum Pulverpressling auf, so dass eine möglichst einheitliche, lochfreie Beschichtung des Pulverpresslings erfolgen kann. Es ist auch möglich, die Auflagestellen mit der Beschichtungslösung zu benetzten, so dass Fehlstellen in der Beschichtung vermieden werden. Ebenso ist es denkbar, die Auflagestellen mit einer hydrophoben oder gar einer superhydrophoben Beschichtung zu versehen, beispielweise umfassend PTFE oder PP.

Idealerweise kann der beschichtete Pulverpressling nach Schritt d) von den Auflagestellen abgeworfen werden. Der Abwurf kann dabei direkt in das Bad mit dem Vernetzungsmittel erfolgen. Dadurch können Löcher in der Beschichtung, die durch die Auflagestellen resultieren können, geschlossen werden.

Es ist auch möglich, dass der Pulverpressling zwischen mindestens zwei Sets aus Auflagestellen, vorzugsweise aus Spitzen, bewegt wird. Dies hat den Vorteil, dass unterschiedliche Positionen besprüht werden können und so eine vollständige Beschichtung erreichbar ist.

Es ist weiter möglich, dass der Pulverpressling während des Aufbringens der Beschichtung in Schritt c) mittels eines Luftstroms bewegt wird. Dies ermöglicht einerseits ebenfalls eine 360° Beschichtung des Pulverpresslings, andererseits ist somit ein Transport des Pulverpresslings möglich, ohne noch flüssige Beschichtungen mit anderen Oberflächen in Kontakt zu bringen und so die Beschichtung zu beschädigen oder die Oberfläche des Pulverpresslings zu beschmutzen.

Der Pulverpressling kann in Schritt c) bei einem Massenauftrag von weniger als 3 g bezogen auf einen kugelförmigen Pressling mit einem Durchmesser von ca. 27 mm mit mindestens einer Sprühdüse und einer Sprührate von mindestens 0.05 g bis 0.7 g/s besprüht werden. Als Sprühdüse eignet sich beispielsweise eine Zweistoffdüse. Mit einer solchen Düse kann eine feine Beschichtung erzielt werden, ohne die Oberfläche des Presslings zu beschädigen oder Coating-Dickstellen zu erzeugen, welche eine mögliche Blasenbildung beim Trocknungsvorgang fördern.

Die Trocknung in Schritt d) kann in einem Binder-Ofen bei 60-90°C, bevorzugt 70-80°C, besonders bevorzugt 75 °C erfolgen. Die Trocknungszeit kann zwischen 10 und 120 min, bevorzugt zwischen 20 und 90 min, besonders bevorzugt zwischen 30 - 60 min betragen. Es ist auch möglich während der Trocknung Temperaturrampen zu fahren. So kann eine Erwärmung von 50°C auf 80°C erfolgen, mit anschliessender Abkühlung von 75°C auf 30°C. Ebenso ist eine Trocknung bei Raumtemperatur oder tieferen Temperaturen, beispielsweise durch Gefriertrocknung, möglich. Die Temperatur der Trocknung wird vorzugsweise derart gewählt, um ein Optimum zwischen Trocknungszeit und Energiebedarf zu erzielen.

Der Pulverpressling wird vorzugsweise aus einem Pulver oder Pulvergemisch mit einem Druck von 1 bis 100 MPa, bevorzugt 5 bis 50 MPa und besonders bevorzugt 15 bis 30 MPa hergestellt.

Ein weiterer Aspekt der Erfindung betrifft eine Kapsel aus einem beschichteten Pulverpressling hergestellt nach einem Verfahren wie vorhergehend beschrieben.

Ein weiterer Aspekt der Erfindung betrifft eine Kapsel, insbesondere wie vorhergehend beschrieben, aufweisend einen Pulverpressling aus einem wenigstens ein Polysaccharid enthaltendem Pulver und genau einer Schicht aus mindestens einem Polysaccharid. Vorzugsweise ist die Schicht eine ummantelnde Schicht, besonders bevorzugt eine vollflächig ummantelnde Schicht. Die eine Schicht weist eine Schichtdicke von mindestens 50 µm, bevorzugt mindestens 80 µm und besonders bevorzugt mindestens 100 µm, auf. Die Schichtdicke bezieht sich dabei auf die trockene Schicht. Die getrocknete Schicht weist eine Feuchtigkeit im Bereich zwischen 7 % und 12 % (w/w) auf. Die Gesamtrestfeuchte des Produkts mit Kaffee im Inneren beträgt nach entsprechender Trocknung bevorzugt kleiner 5 % (w/w).

Als Kapsel kann dabei der Pressling mit wenigstens einer Schicht verstanden werden.

Eine Kapsel mit genau einer Schicht lässt sich besonders leicht und ökologisch herstellen. Beschichtungsschritte müssen nicht unnötig wiederholt werden, die genau eine Beschichtungsschicht bildet einen sehr guten Transportschutz und eine gute Sauerstoffbarriere.

Der beschichtete Pulverpressling kann in trockenem Zustand eine maximale Kraft in einem Bruchfestigkeitstest von mindestens 50 N, bevorzugt mindestens 80 N und besonders bevorzugt mindestens 100 N aufweisen.

Für den Bruchfestigkeitstest wird die Kapsel zwischen zwei parallelen Platten einer Zug-Druck-Prüfmaschine (beispielsweise mit einem Kraftaufnehmer Xforce P der Firma Zwick/Roell ausgestattet) positioniert. Dabei wird die Kapsel mittig auf der unteren Platte in Extraktionsrichtung, im Falle eines drehsymmetrischen Presslings, beispielsweise mit Kugel- oder Würfelform, in Pressrichtung ausgerichtet. Die Platten weisen einen Durchmesser auf, welcher wenigstens 50 % grösser ist als der maximale Kapseldurchmesser. Die parallelen Platten werden langsam zusammengefahren und ein Kraft-Weg-Diagramm aufgezeichnet. Die Belastung wird erhöht bis zur Beschädigung der Hülle. Gleichzeitig mit diesem Anriss oder Bruch ist ein Kraftabfall festzustellen. Wenn die gemessene Kraft unter die Kraftabfallschwelle von 40 % der maximalen Kraft absinkt, wird der Bruchfestigkeitstest beendet. Die maximale gemessene Kraft ohne Beschädigung der Hülle wird als Bruchfestigkeit ausgegeben.

Der Pulverpressling besteht vorzugsweise aus einem Pulver oder Pulvergemisch und enthält besonders bevorzugt gemahlener Kaffee, Instantkaffee, Getreidekaffee, Malzkaffee, Tee, Teegranulat, Trinkschokoladenpulver oder Milchpulver.

Das mindestens eine Polysaccharid der einen Schicht kann ausgewählt sein aus der Gruppe bestehend aus: Alginate, Stärken, modifizierte Stärken, Cellulosen, Chitin, Chitosan, Carragenen, Pektine, Agar, Xanthan, Gellan, Dextrane, Galactomannan, Glucomannan, Guaran, Carubin, Gummi Arabicum, Scleroglucan, Pullulan, Derivate oder Mischungen davon, bevorzugt Alginat.

Die Konzentration an Polysaccharid und insbesondere Alginat für die Beschichtungslösung kann zwischen 0.5 und 10.0 %, bevorzugt 0.8 und 5.0 % und besonders bevorzugt bei 2.0 bis 3.0 % (w/w) liegen.

Die Schicht kann Fasern enthalten, vorzugsweise ausgewählt aus der Gruppe bestehend aus: Alginat-Fasern, Cellulose-Fasern; Viskose-Fasen; PLA-Fasern; mineralische Fasern, vorzugsweise aus Siliziumdioxid; Kunststoffasern, vorzugsweise Aramid-, Polyethylen- und Polyamid-Fasern; oder Derivate davon. Als Cellulosederivat ist beispielsweise Hydroxypropylmethylcellulose (HPMC) denkbar.

Die Fasern führen zu einer zusätzlichen Verstärkung der Beschichtung. Der Fasergehalt in der Beschichtungslösung kann beispielsweise zwischen 0.1 und 10.0 % (w/w), bevorzugt zwischen 0.5 und 7.0 % und besonders bevorzugt 1.0 - 5.0 % (w/w) betragen. Neben der Verstärkung der Beschichtung können Fasern in der Beschichtungslösung auch die Blasenbildung im Coating verringern oder ganz verhindern.

Die Schicht kann weiter mindestens ein Polyol enthalten. Dazu können Beschichtungslösung zum Einsatz kommen, die vorzugsweise eine Konzentration zwischen 1 bis 30 %, vorzugsweise 5 bis 25 % und besonders bevorzugt 10 bis 20 % mindestens eines Polyols aufweisen. Mit der Wahl des Polyols kann die Durchlässigkeit der Beschichtung beeinflusst werden. Defekte im Coating, wie beispielsweise Blasenbildung können ebenso beeinflusst werden.

Vorteilhafterweise ist das mindestens eine Polyol ausgewählt aus der Gruppe bestehend aus aliphatische Polyole, bevorzugt Ethylenglykol, Propandiol, Butylenglykol, Triethylenglykol, Polyethylenglykol, Polypropylenglykol, Sorbitol, Erythrit, Xylit und ganz besonders bevorzugt Glycerin und Sorbitol; cyclische Polyole, bevorzugt Glukose, Fruktose, Mannose, Galaktose, Oligofruktose, Inulin, Isomaltulose, Trehalose; Zuckeraustauschstoffe, bevorzugt Mannit, Isomalt, Maltit, Lactit; und aromatische Polyole, bevorzugt Cyanidin, Corilagin, Digallinsäure, Tanninsäure und Gallussäure; und Kombinationen davon.

Das Polyol kann als zusätzlicher Vernetzer dienen oder in die Beschichtung eingelagert sein, z.B. durch elektrostatische Wechselwirkung. Durch das Polyol lassen sich die mechanischen Eigenschaften der Beschichtung hinsichtlich der Elastizität einstellen.

Ein weiterer Aspekt der Erfindung betrifft die Verwendung einer Kapsel wie vorhergehend beschrieben zum Herstellen eines Getränkes.

Die Erfindung wird anhand von Beispielen näher erläutert. Die Beispiele dienen der Veranschaulichung der Erfindung und sind nicht limitierend zu verstehen.

### Beispiel 1

Es wurde ein kugelförmiger Pressling aus 6.2 g Kaffeepulver durch Pressen mit einem Pressstempel erzeugt. Dieser wurde nach dem Pressen mit einer herkömmlichen Sprühflasche oberflächlich leicht mit Leitungswasser befeuchtet.

Zum Beschichten des Presslings wurde folgende Beschichtungszusammensetzung verwendet: 2.5 % Na-Alginat (medium viskos), 3 % Cellulose Fasern, 14.3 % Sorbitol (w/w). Die Viskosität lag bei 899 mPas mit eine Fliessgrenze von 80 Pa, gemessen bei 30°C mittels eines Rheometer MCR72 der Firma Anton Paar mit Platte-Platte Messsystem mit 50 mm Platten-Durchmesser

Die Beschichtungslösung wurde mittels Sprühtechnik auf den Pressling aufgetragen. Um den Pulverpressling vollständig zu besprühen, wurde dieser zwischen zwei Spitzensets mit hydrophobierten Spitzen umgesetzt. Die Spitzensets waren auf einem Drehteller montiert, welcher sich mit einer Geschwindigkeit von 20 rpm drehten.

Der Auftrag der Beschichtungslösung erfolgte mit zwei Zweistoffdüsen, die jeweils mit einer PF2850-SS Flüssigkeitskappe und PA70 Vollkegel-Luftkappe (Spraying Systems Co.) ausgestattet waren. Die Düsen waren auf im Winkel von -30.5° und 40.5° zur Horizontalen und in einem Abstand von 60 mm zum rotierenden Pressling orientiert. Der Pressling wurde so allseits besprüht, ohne die Pressling-Oberfläche zu beschädigen. Mit einer Sprühzeit von 10 s wurde so ein Massenauftrag von 2.1 g eingestellt.

Anschliessend wurde der Pressling in ein Calciumchlorid-Dihydrat -Bad abgeworfen. Die Verweilzeit des Presslings im Bad betrug dabei 6 Sekunden, die Konzentration betrug 20 % (w/w). Die Temperatur des Bads lag bei 25 °C. Nach dem vollständigen Eintauchen in das Calciumchlorid-Dihydrat-Bad wurde der gelierte beschichtete Pressling mit enthärtetem Wasser abgespült.

Um die Beschichtung auszuhärten und die gewünschte Restfeuchte einzustellen, wurde der Pressling für 60 min bei 75°C in einem herkömmlichen Trockner-Wärmeschrank (Ventilation und Entfeuchtung bis 5% rF) getrocknet. Nach 5 min wurde der beschichtete Pressling gewendet und nach Ende der Trocknungszeit wurde dieser im Exsikkator bei Raumtemperatur abgekühlt.

Nach dem oben beschriebenen Verfahren konnte ein 1-schichtiger loch- und blasenfreier beschichteter Pressling mit einer Restfeuchte von < 5 % (w/w) und einer Bruchfestigkeit von mindestens 100 N hergestellt werden.

Dieser so erhaltene beschichtete Pressling wurde mit einem Pressling verglichen, der mittels einer dünnflüssigen Beschichtung mittels Alginat-Bad mit einer Konzentration von 1.5 % (w/w) Alginat produziert wurde. Der Einsatz hochviskoser Alginat-Rezepturen führt bei der Verwendung eines Alginat-Bades zu unkontrollierbaren Dicken der Schichten mit erheblichen Trocknungsnachteil.

| | **Konventionelle (niederviskose) Beschichtung, 3-schichtig** | **Hochviskose Beschichtung, 1-schichtig** |
|---|---|---|
| **Alginat [%]** | 1.3 | 2.5 |
| **Cellulose [%]** | 0.7 | 3.0 |
| **Sorbitol [%]** | 8.0 | 14.3 |
| **Wasser [%]** | 90.0 | 80.2 |
| **Sorbitol/Alginat** | 6.2 | 5.7 |
| **Cellulose/Alginat** | 0.5 | 1.2 |
| **Trockenmasse [%]** | 10.0 | 19.8 |
| **Massenauftrag [g] (nass)** | 3.2 | 2.1 |

Es zeigte sich, dass der nasse Massenauftrag im Vergleich zur Herstellungsmethode mit niederviskosen Alginatlösungen deutlich verringert werden kann, wobei gleichzeitig eine höhere Trockenmasse resultiert. Somit ergibt sich einerseits ein sehr effizienter Schichtauftrag und andererseits, durch einschichtiges Beschichten (hochviskos) vs. 3-schichtiges Beschichten (niederviskos) ein geringerer Energiebedarf für die Trocknung.

Weiter wurden die Bruchfestigkeit des einschichtig beschichteten Presslings gemäss oben beschriebenen Verfahren überprüft und es konnten Stabilitäten von > 100 N mit einer einzigen Schicht erzielt werden.

### Beispiel 2

Es wurde ein kugelförmiger Pressling aus 5.7 g Kaffeepulver hergestellt. Dieser wurde nach dem Pressen mit Wasser befeuchtet.

Zum Beschichten des Presslings wurde folgende Beschichtungszusammensetzung verwendet: 2.5% Na-Alginat (medium viskos), 3 % Cellulose, 7 % Sorbitol und 7 % Glycerin (w/w). Die Viskosität lag bei 898 mPas mit einer Fliessgrenze von 91 Pa. Die Beschichtungslösung wurde bei 50°C unter ständigem Rühren mit 0.04 % Calciumionen in Form von Calciumchlorid Dihydrat versetzt und auf 50°C gehalten, damit die Beschichtungsmasse durch die enthaltenen Calciumionen nicht gelierte.

0.75 g der warmen hochviskosen Beschichtungslösung wurden in eine Aluminium-Form mit einer halbkugelförmigen Kavität gefüllt. Ein ebenfalls halbkugelförmiger Stempel aus Aluminium wurde von oben in die Kavität mit Beschichtungslösung gefahren, sodass diese in den Spalt zwischen Halbkugelkavität und Stempel verdrängt wurde. Die Spaltbreite betrug dabei 500 µm. Dann wurden Form und Stempel auf 5°C heruntergekühlt und das Ca-Alginat im Spalt gelierte. Der Stempel wurde rotierend aus dem Alginat gezogen. Anschliessend wurde der Pressling in die dadurch geschaffene Öffnung gesetzt.

Eine zweite Aluminium-Halbkugelform wurde über den Pressling platziert, so dass wiederum eine Spaltbreite von 500 µm resultierte. Durch eine Öffnung von oben wurde die Form mit 0.75 g warmer hochviskoser Beschichtungslösung befüllt, um den Pressling auch von oben zu beschichten. Anschliessend wurde die obere Aluminium-Halbkugelform abgekühlt bis die Masse bei ca. 5°C gelierte.

Im Anschluss wurde der rundum mit Ca-Alginat beschichtete Pressling zur vollständigen Gelierung in ein Calciumchlorid-Dihydrat-Bad mit einer Verweilzeit von 6 Sekunden und einer Konzentration von 20 % (w/w) eingebracht. Nach dem Calciumchlorid-Dihydrat Bad wurde der gelierte beschichteten Pressling mit enthärtetem Wasser abgespült.

Analog zum Beispiel 1 wurde der beschichtete Pressling für die gewünschte Restfeuchte für 60 min bei 80°C in einem herkömmlichen Trockner-Wärmeschrank (Ventilation und Entfeuchtung bis 5% rF) getrocknet. Nach 5 min wurde der beschichtete Pressling gewendet und nach Ende der Trocknungszeit wurde dieser im Exsikkator bei Raumtemperatur abgekühlt.

## Patentansprüche

1. Verfahren zur Beschichtung eines Pulverpresslings, insbesondere zur Herstellung einer Getränkepulver enthaltenen Kapsel, welches die folgenden Schritte umfasst:
a) Bereitstellen eines Pulverpresslings aus einem wenigstens ein Polysaccharid enthaltenden Pulver,
b) Bereitstellen einer hochviskosen Beschichtungslösung aus mindestens einem Polysaccharid zum Beschichten des Pulverpresslings
c) Aufbringen der Beschichtungslösung auf den Pulverpressling in Form einer hochviskosen Schicht,
d) Trocknen des beschichteten Pulverpresslings,
**dadurch gekennzeichnet, dass** die Beschichtungslösung eine Viskosität zwischen mindestens 400 mPas und maximal 4000 mPas, bevorzugt zwischen 600 und 2500 mPas und besonders bevorzugt zwischen 800 und 1500 mPas aufweist, gemessen mit einem Platte-Platte Messsystem.

2. Verfahren nach Anspruch 1, wobei das Aufbringen in Schritt c) durch Einbringen des Presslings in eine Teilhülle und anschliessendem Umspritzen erfolgt.

3. Verfahren nach Anspruch 1, wobei das Aufbringen in Schritt c) mit einer Sprühtechnik erfolgt.

4. Verfahren nach einem der vorherigen Ansprüche, wobei die Beschichtungslösung in oder nach Schritt c) zusätzlich mit einem Vernetzungsmittel vernetzt wird.

5. Verfahren nach Anspruch 4, wobei das Vernetzungsmittel eine Erdalkalimetallionen-Lösung ist.

6. Verfahren nach Anspruch 4 oder 5, wobei das Vernetzungsmittel in der Beschichtungslösung integriert ist und das Vernetzen verzögert, insbesondere durch den Einsatz von schwerlöslichen Erdalkalisalzen mit einer definierten Menge geeigneter Komplexbildner, durch Herabsetzen des pH-Wertes und/oder der Temperatur, ausgelöst wird.

7. Verfahren nach einem der vorherigen Ansprüche, wobei eine Fliessgrenze der Beschichtungslösung zwischen mindestens 1 Pa und maximal 170 Pa, bevorzugt zwischen 25 Pa und 150 Pa besonders bevorzugt zwischen 50 Pa und 100 Pa liegt, gemessen bei 30°C mittels eines Rheometers mit Platte-Platte Messsystem mit 50 mm Platten-Durchmesser.

8. Verfahren nach einem der Ansprüche 3 bis 7, wobei der Pulverpressling in Schritt c) an Auflagestellen, vorzugsweise auf mindestens einem Set aus Spitzen, aufliegt.

9. Verfahren nach Anspruch 6, wobei der beschichtet Pulverpressling nach Schritt d) von den Auflagestellen abgeworfen wird.

10. Verfahren nach Anspruch 6 oder 7, wobei der Pulverpressling zwischen mindesten zwei Sets aus Auflagestellen bewegt wird.

11. Verfahren nach einem der vorherigen Ansprüche, wobei der Pulverpressling während des Aufbringens der Beschichtung in Schritt c) mittels eines Luftstroms bewegt wird.

12. Verfahren nach einem der vorherigen Ansprüche, wobei der Pulverpressling in Schritt c) bei einem Massenauftrag von weniger als 3 g mit mindestens einer Sprühdüse und einer Sprührate von mindestens 0.05 g bis 0.7 g/s besprüht wird.

13. Verfahren nach einem der vorherigen Ansprüche, wobei der Pulverpressling aus einem Pulver oder Pulvergemisch mit einem Druck von 1 bis 100 MPa, bevorzugt 5 bis 50 MPa und besonders bevorzugt 15 bis 30 MPa hergestellt wird.

14. Kapsel aus einem beschichteten Pulverpressling hergestellt nach einem Verfahren gemäss einem der Ansprüche 1 bis 11.

15. Kapsel, insbesondere nach einem der vorherigen Ansprüche, aufweisend einen Pulverpressling aus einem wenigstens ein Polysaccharid enthaltendem Pulver und genau einer, vorzugsweise aus hochviskosem Beschichtungsmaterial hergestellten, Schicht aus mindestens einem Polysaccharid, **dadurch gekennzeichnet, dass** die eine Schicht eine Schichtdicke von mindestens 50 pm, bevorzugt mindestens 80 µm und besonders bevorzugt mindestens 100 µm im getrockneten Zustand, aufweist.

16. Kapsel nach Anspruch 14 oder 15, wobei der beschichtete Pulverpressling in trockenem Zustand eine maximale Kraft in einem Bruchfestigkeitstest von mindestens 50 N, bevorzugt mindestens 80 N und besonders bevorzugt mindestens 100 N aufweist.

17. Kapsel nach einem der Ansprüche 14 bis 16, wobei der Pulverpressling aus einem Pulver oder Pulvergemisch besteht und vorzugsweise gemahlener Kaffee, Instantkaffee, Getreidekaffee, Malzkaffee, Tee, Teegranulat, Trinkschokoladenpulver oder Milchpulver enthält.

18. Kapsel nach einem der Ansprüche 14 bis 17, wobei das mindestens eine Polysaccharid der einen Schicht ausgewählt ist aus der Gruppe bestehend aus: Alginate, Stärken, modifizierte Stärken, Cellulosen, Chitin, Chitosan, Carragenen, Pektine, Agar, Xanthan, Gellan, Dextrane, Galactomannan, Glucomannan, Guaran, Carubin, Gummi Arabicum, Scleroglucan, Pullulan, Derivate oder Mischungen davon, bevorzugt Alginat.

19. Kapsel nach einem der Ansprüche 14 bis 18, wobei die Schicht Fasern enthält, vorzugsweise ausgewählt aus der Gruppe bestehend aus: Alginat-Fasern, Cellulose-Fasern; Viskose-Fasen; PLA-Fasern; mineralische Fasern, vorzugsweise aus Siliziumdioxid; Kunststoffasern, vorzugsweise Aramid-, Polyethylen- und Polyamid-Fasern; oder Derivate davon.

20. Verwendung einer Kapsel nach einem der Ansprüche 14 bis 19 zum Herstellen eines Getränkes.
